# EUROPÄISCHE PATENTANMELDUNG

(11) **EP 3 386 060 A1**
(43) Veröffentlichungstag der Anmeldung: **10.10.2018**
(21) Anmeldenummer: 18163977.4
(22) Anmeldetag: 26.03.2018
(51) Int. Cl.: H02J 3/38, F03D 80/80, F03D 9/25

(54) **WINDENERGIEANLAGE MIT SPEISELEITUNG**

(30) Priorität: 30.03.2017 DE 102017003078
(71) Anmelder: Senvion GmbH, 22297 Hamburg (DE)
(72) Erfinder: Letas, Heinz-Hermann, 24796 Bovenau (DE)
(74) Vertreter: Glawe, Delfs, Moll

(57) **Zusammenfassung**

Windenergieanlage umfassend einen Windrotor mit einem Generator und einen Umrichter. Die erzeugte elektrische Leistung wird vom Umrichter (3) mittels einer Speiseleitung (5) einem Anlagentransformator (6) zur Abgabe an ein Netz zugeführt. Erfindungsgemäß ist die Speiseleitung (5) als Doppelzweig mit leistungsverzweigter Leistungsschaltereinheit ausgeführt, mit einer ersten Speiseleitung (51) und einer parallelgeschalteten zweiten Speiseleitung (52), wobei jeder Speiseleitung (51, 52) eine eigene Niederspannungswicklung (61, 62) des Anlagentransformators (6) und ein eigener Leistungsschalter (41, 42) am Anschluss des Umrichters (3) zugeordnet ist. Somit braucht jeder Leistungsschalter (41, 42) nur den Strom der ihm zugeordneten Speiseleitung (51, 52) zu übernehmen, und zwar auch dann, wenn bei Schaltvorgängen einer der beiden Leistungsschalter schneller schaltet als der andere. Herkömmlicherweise musste bei parallelgeschalteten Leistungsschaltern der langsamere temporär den gesamten Strom aufnehmen, was zur Überlastung und Zerstörung führte. Die Erfindung vermeidet dies und schafft so eine robuste Leistungsverzweigung.

## Beschreibung

Die Erfindung betrifft eine Windenergieanlage umfassend einen Windrotor und einen Generator sowie ein Umrichter zur Erzeugung elektrischer Leistung, die über einen Anlagentransformator an ein Netz abgegeben wird.

Moderne Windenergieanlagen sind zur Erzeugung elektrischer Leistung in beträchtlicher Höhe befähigt. Typischerweise weisen sie Leistungen von mehreren Megawatt auf. Die von der Windenergieanlage erzeugte elektrische Leistung wird über einen der Windenergieanlage zugeordneten Transformator (Anlagentransformator) in der Regel auf ein zur Weiterleitung geeigneteres, höheres Spannungsniveau angehoben (meist ein Mittelspannungsniveau). Zum Schutz der Windenergieanlagen und des Netzes sind Leistungsschalter auf beiden Seiten des Anlagentransformators erforderlich. Problematisch hierbei ist, dass die Leistungsschalter auf der Niederspannungsseite des Anlagentransformators recht hohe Ströme aufzunehmen haben. Bei den nunmehr erreichten Windenergieanlagenleistungen von einigen Megawatt macht dies mitunter teure Sonderkonstruktionen für die Leistungsschalter erforderlich.

Um dennoch ausreichend große Ströme bewältigen zu können, sind verschiedene Wege vorgeschlagen worden. Ein erster Weg läge darin, das Spannungsniveau auf Niederspannungsseite zu erhöhen, um so die Strombelastung zu senken. Dies erweist sich jedoch als nicht praktikabel wegen der in einschlägigen Normwerken festgelegten Obergrenzen für Spannungen, sodass diese noch in den Niederspannungsbereich fallen. Die Grenzwerte (1000 Vac) sind bereits ausgereizt. Ein zweiter Weg könnte darin liegen, einfach zwei Leistungsschalter parallel zu schalten. Dieser interne Vorschlag der Anmelderin kann zwar als Vorteil für sich buchen, dass im Normalbetrieb jeder der beiden Leistungsschalter nur die halbe Stromstärke aufzunehmen hat. Jedoch erweist sich dies als nicht hinreichend betriebssicher im Fall von Umschaltung. Denn aufgrund baulicher Toleranzen ist es praktisch unvermeidbar, dass einer der beiden Leistungsschalter schneller schaltet als der andere, sodass in der Zwischenzeit der gesamte Strom über nur einen einzigen Leistungsschalter fließt. Dieser wird dadurch überlastet. Diese Problematik wirkt sich besonders ungünstig in einem Kurzschlussfall aus, wenn die höchste Strombelastung auftritt. Im Ergebnis bedeutet dies, dass genau in der Situation, wenn (bspw. in einem Kurzschluss) die Leistungsschalter benötigt werden, sie mit hoher Wahrscheinlichkeit wegen Überlastung ausfallen. Das ist unbefriedigend.

Der Erfindung liegt die Aufgabe zugrunde, eine verbesserte Schaltungsanordnung für die Leistungsschalter bereitzustellen, um den genannten Nachteil zu vermeiden.

Die erfindungsgemäße Lösung liegt in den Merkmalen des unabhängigen Anspruchs. Vorteilhafte Weiterbildungen sind Gegenstand der abhängigen Ansprüche.

Die Erfindung betrifft eine Windenergieanlage umfassend einen Windrotor mit einem Generator und einen Umrichter zur Erzeugung elektrischer Leistung, die über eine Speiseleitung und einen Anlagentransformator an ein Netz abgegeben wird. Erfindungsgemäß ist vorgesehen, die Speiseleitung als Doppelzweig mit leistungsverzweigter Leistungsschaltereinheit aufzuführen mit einer ersten Speiseleitung und einer parallelgeschalteten zweiten Speiseleitung, wobei jeder Speiseleitung eine eigene Niederspannungswicklung des Anlagentransformators und ein eigener Leistungsschalter für den Umrichter zugeordnet ist.

Unter einem Leistungsschalter wird ein elektromechanisches Betriebsmittel zum Anschluss des Umrichters verstanden, welches kraftbetätigt ist und Sicherungsfunktion ausübt, indem es auch bei Überlaststrom eine Abtrennung bewirkt. Dazu ist der Leistungsschalter so ausgebildet, dass er Kurzschlussströme aufnehmen kann. Mehrere Leistungsschalter können zu einer Leistungsschaltereinheit zusammengefasst sein.

Die Erfindung beruht auf dem Gedanken, jedem Leistungsschalter eine eigene Niederspannungswicklung des Anlagentransformators und eine eigene Speiseleitung zuzuordnen. Hierdurch braucht der jeweilige Leistungsschalter nur den Strom dieser einen Niederspannungswicklung aufzunehmen, und zwar zu jedem Zeitpunkt. Dies gilt also auch dann, wenn beim Umschalten einer der beiden Leistungsschalter schneller schaltet als der andere; auch in diesem Fall braucht der langsamer schaltende Leistungsschalter nicht den gesamten Strom aufzunehmen, sondern nur einen Bruchteil. Anders ausgedrückt schaltet dank der Erfindung jeder Zweig der Speiseleitung sozusagen für sich; kein Leistungsschalter muss den Gesamtstrom führen, und zwar auch nicht kurzzeitig. Damit wird auf verblüffend einfache Weise erreicht, den von der Windenergieanlage erzeugten und einzuspeisenden Strom stabil auf mehrere Leistungsschalter aufzuteilen, und zwar derart, dass auch beim Umschalten keine dynamischen Überlastungen hinsichtlich der maximalen Strombelastbarkeit auftreten können.

Zweckmäßigerweise können weitere Speiseleitungen mit jeweils eigener Nebenschlusswicklung und eigenem Leistungsschalter vorgesehen sein. Vorzugsweise sind also drei oder mehr Speiseleitungen vorgesehen.

Vorzugsweise wirken die Niederspannungswicklungen der ersten bzw. zweiten Speiseleitung (oder auch weiterer Speiseleitungen) auf eine gemeinsame Mittelspannungswicklung des Anlagentransformators ein. Es wird also ein Mehrwicklungstransformator vorgesehen, bei dem mehrere Niederspannungswicklungen auf eine gemeinsame Mittelspannungswicklung wirken. Dies ermöglicht einen kompakten und kostensparenden Aufbau. Dennoch bleibt die für die Erfindung tragende Autarkie der einzelnen Speiseleitungen, bei der jedem Leistungsschalter genau eine Niederspannungswicklung des Transformators zugeordnet ist, vollständig erhalten.

Alternativ kann aber auch vorgesehen sein, dass gesonderte Anlagentransformatoren für die Speiseleitungen vorgesehen werden, sodass jede Speiseleitung ihren eigenen Transformator aufweist. Dies ist zwar aufwendiger, kann aber den Vorteil größerer Redundanz für sich buchen. Weiter hat dies den für die im Rahmen der Erfindung besonders bedeutenden Vorteil, dass sich damit eine Impedanzerhöhung der Transformatoren ergibt, sodass der Kurzschlussstrom in der jeweiligen Speiseleitung verringert wird. Damit wird eine weitere Entlastung der Leistungsschalter erreicht.

Besonders bevorzugt ist es, wenn keine Querverbindung zwischen der ersten und der zweiten Speiseleitung (und ggf. weiteren Speiseleitungen) besteht. Damit wird erreicht, dass auch im Fall eines bspw. defekten Leistungsschalters kein Strom aus der einen Speiseleitung durch den Leistungsschalter der anderen Speiseleitung fließen kann. Der gewünschte Überlastungsschutz wird damit vergrößert.

Weiter kann zweckmäßigerweise vorgesehen sein, dass zwei (oder mehr) Umrichter vorgesehen sind, an die die zwei (oder mehreren) Speiseleitungen angeschlossen sind. Da somit jeder Speiseleitung ihr eigener Umrichter zugeordnet sein kann, gilt die beschriebene Wirkung auch im Hinblick auf den Umrichter. So kann es selbst im Normalbetrieb nicht auftreten, dass im Fall einer Störung eines Leistungsschalters der benachbarte Leistungsschalter entsprechend mehr Strom aufnehmen müsste und dadurch überlastet würde. Damit erhöht sich die Zuverlässigkeit weiter.

Zweckmäßigerweise sind die den Speiseleitungen zugeordneten Transformatoren gleich dimensioniert, wobei Dimensionierungsabweichungen zulässig sind bis maximal zu einer Abweichung von 20%, vorzugsweise maximal 10%. Durch diese gleiche Dimensionierung wird erreicht, dass die Speiseleitungen im Normalfall alle gleichmäßig belastet werden. Dadurch wird vermieden, dass bestimmte Leistungsschalter mit größeren Strömen als ein anderer der Leistungsschalter belastet werden, sodass auch der an sich unvermeidliche Verschleiß der Leistungsschalter vergleichmäßigt ist. Damit wird nicht nur die Störsicherheit erhöht, sondern die Betriebssicherheit der Windenergieanlagen insgesamt.

Es sei angemerkt, dass am Transformator häufig eigene Sicherungen angeordnet sind. Diese dienen nur dem Schutz der Speiseleitung bei Kurzschlüssen. Es handelt sich hierbei also nicht um Leistungsschalter im Sinne der Erfindung.

Die Erfindung wird nachfolgend unter Bezugnahme auf die beigefügte Zeichnung näher erläutert, in der ein vorteilhaftes Ausführungsbeispiel dargestellt ist. Es zeigen:

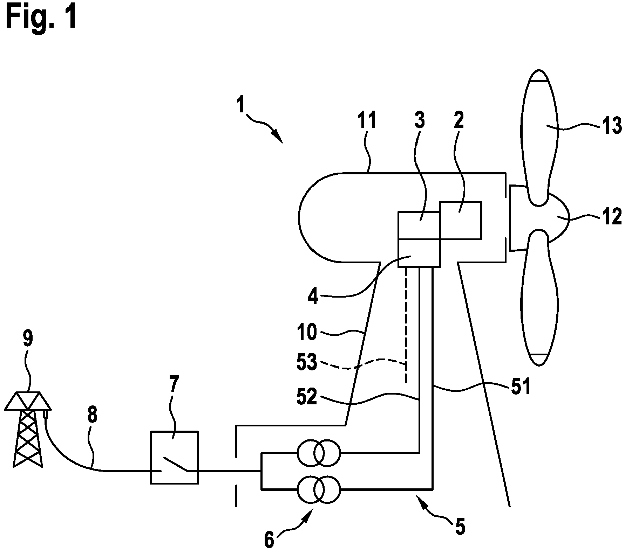

- Fig. 1:: eine schematische Ansicht einer Windenergieanlage gemäß einem Ausführungsbeispiel der Erfindung;
- Fig. 2:: ein Funktionsdiagramm zu einem ersten Ausführungsbeispiel der Erfindung;
- Fig. 3:: ein Funktionsdiagramm zu einem zweiten Ausführungsbeispiel der Erfindung;
- Fig. 4a-c:: Diagramme darstellend Spannungs- und Stromverläufen sowie Schalterstellungen; und
- Fig. 5:: ein Schemabild zu einer Windenergieanlage gemäß dem Stand der Technik.

Ein in ihrer Gesamtheit mit der Bezugsziffer 1 bezeichnete Windenergieanlage gemäß einem Ausführungsbeispiel der Erfindung umfasst eine am oberen Ende eines Turms schwenkbar angeordnete Gondel 11, an deren Stirnseite ein Windrotor 12 mit mehreren Rotorblättern 13 drehbar angeordnet ist. Der Windrotor 12 treibt über eine (nicht dargestellte) Rotorwelle einen Generator 2 an, der die vom Windrotor 12 zugeführte mechanische Leistung in elektrische Leistung umwandelt und über einen Umrichter 3 ausgibt. Am Ausgang des Umrichters 3 ist eine Leistungsschaltereinheit 4 angeordnet, die in dem dargestellten Ausführungsbeispiel einen ersten Leistungsschalte 41 und einen zweiten Leistungsschalter 42 umfasst. Die elektrische Leistung wird von dort über Speiseleitungen 5 einem Anlagentransformator 6 auf einem Niederspannungsniveau zugeführt. Der Anlagentransformator 6 ist dazu ausgebildet, die auf Niederspannungsniveau zugeführte elektrische Leistung auf ein Mittelspannungsniveau anzuheben und über eine Mittelspannungsleitung 8 an ein Netz 9 abzugeben. Bei dem Netz 9 kann es sich um ein Energieübertragungsnetz oder um ein lokales Netz, wie bspw. das Parknetz eines Windparks, handeln.

Für die Speiseleitung ist in dem dargestellten Ausführungsbeispiel vorgesehen eine Anordnung aus zwei parallelen Speiseleitungen, einer ersten Speiseleitung 51 und einer zweiten Speiseleitung 52. Nachfolgend sei der an sich identisch ausgeführte Aufbau der Speiseleitung am Beispiel der Speiseleitung 51 erläutert. Die Speiseleitung 51 ist mit ihrem einen Ende an den Umrichter 3 angeschlossen, genauer gesagt an einen am Ausgang des Umrichters 3 angeordneten ersten Leistungsschalter 41. Es sei angenommen, dass der Umrichter 3 in der Gondel 11 der Windenergieanlage und der Anlagentransformator 6 am Fuß des Turms 10 der Windenergieanlage 1 angeordnet ist. Die Speiseleitung 51 läuft somit von der Leistungsschaltereinheit 4 an dem Umrichter 3 durch den Turm 10 zu einer Niederspannungswicklung 61 des am Turmfuß angeordneten Anlagentransformators 6 angeschlossen ist. Der Anlagentransformator 6 umfasst außer dieser ersten Niederspannungswicklung 61 noch mindestens eine zweite Niederspannungswicklung 62, die beide gemeinsam auf eine Mittelspannungswicklung 60 wirken, an welche das Netz 9 angeschlossen ist. Die zweite Speiseleitung 52 ist entsprechend aufgebaut und umfasst am Umrichter 3 einen zweiten Leistungsschalter 42, der die zweite Speiseleitung 52 mit der zweiten Niederspannungswicklung 62 des Anlagentransformators 6 verbindet. Eine Querverbindung zwischen den Speiseleitungen 51, 52 besteht nicht, jedenfalls nicht auf Niederspannungsniveau. An der Mittelspannungsleitung 8 des Anlagentransformators 6 ist ein Mittelspannungsschalter 7 vorgesehen. Optional kann eine (oder mehrere) weitere Speiseleitung 53 vorgesehen sein, die lediglich symbolhaft dargestellt und entsprechend wie die ersten und zweiten Speiseleitungen 51, 52 ausgeführt ist und über einen eigenen Leistungsschalter (nicht dargestellt) verfügt.

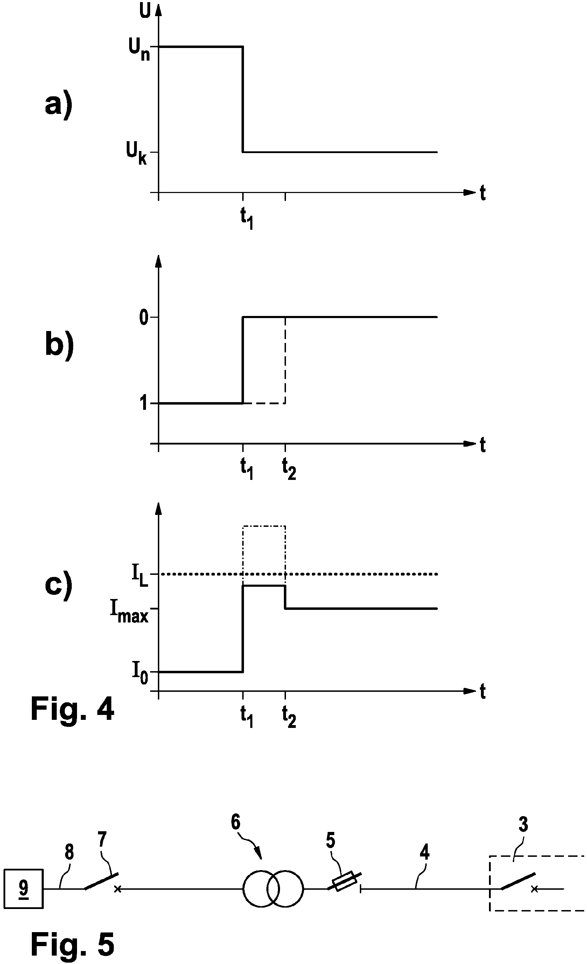

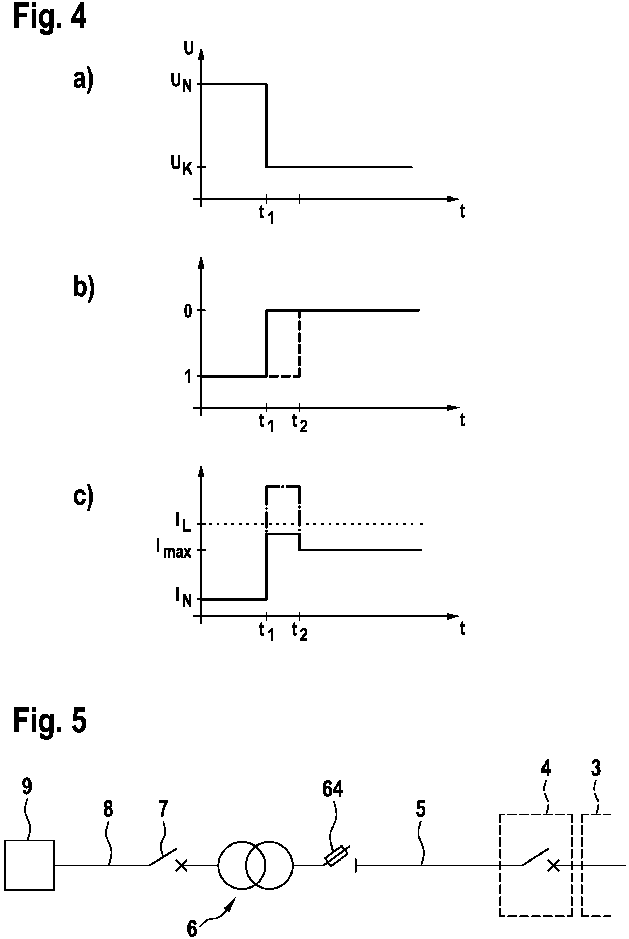

Im Stand der Technik erfolgt die Leistungsübertragung gemäß dem in Fig. 5 dargestellten Schema. Der Umrichter 3 gibt die Leistung über eine Speiseleitung 5 ab an einen Anlagentransformator 6 mit eigener Sicherung 65, der sie wiederum über einen Mittelspannungsschalter 7 in ein Netz 9 einspeist. Zur Absicherung und Abtrennung der Windenergieanlage 1, insbesondere im Kurzschlussfall, ist ein einzelner Leistungsschalter 4 in der Speiseleitung 4 am Umrichter 3 vorgesehen.

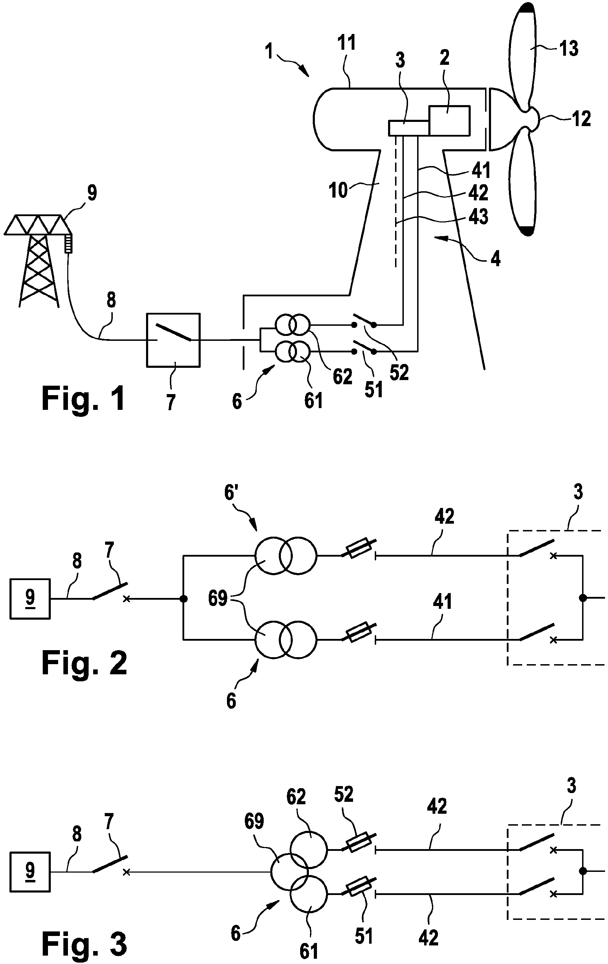

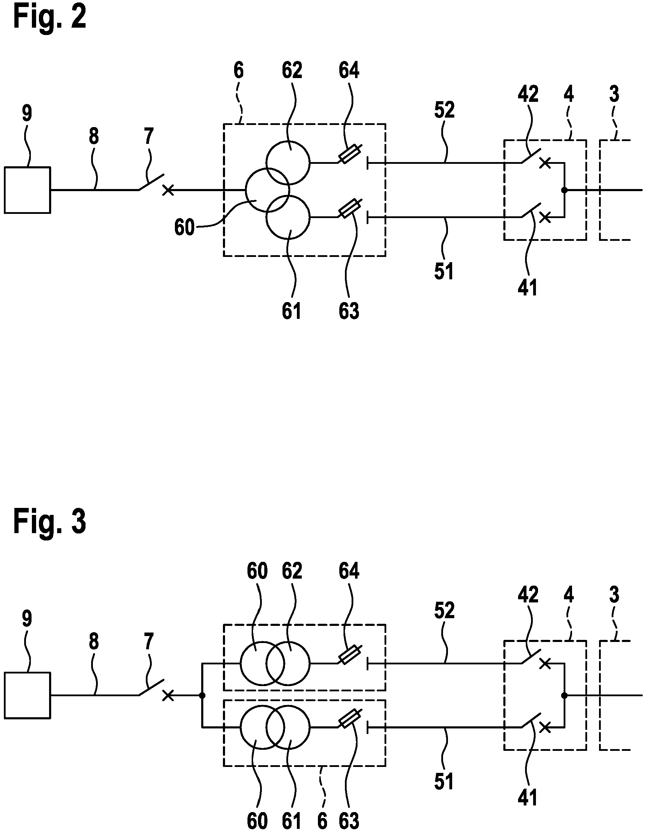

Es wird nunmehr Bezug genommen auf die Darstellung in Fig. 2, welche ein erstes Ausführungsbeispiel der Erfindung schematisiert darstellt. Deutlich erkennt man die parallele Führung der Speiseleitungen 51, 52 mit den Leistungsschaltern 41, 42, über welche der Umrichter 3 an dem Anlagentransformator 6 angeschlossen ist. Durch die Parallelschaltung fließt in den beiden Speiseleitungen 51, 52 jeweils etwa der gleiche Strom, der nur halb so hoch ist wie bei einer herkömmlichen Ausführung mit lediglich nur einer Speiseleitung (siehe Fig. 5). Somit wird im regulären Betrieb eine Halbierung der Strombelastung für die Leistungsschalter 41, 42 erreicht. Somit kann erfindungsgemäß bei gleichbleibender Strombelastbarkeit der Leistungsschalter 41, 42 eine Verdoppelung der Nennströme und damit eine Verdoppelung der Nennleistung der Windenergieanlage verglichen mit einer herkömmlichen Ausführung gemäß Fig. 5 erreicht werden.

Eine alternative Ausführungsform ist in Fig. 3 dargestellt. Sie unterscheidet sich von der in Fig. 2 dargestellten ersten Ausführungsform im Wesentlichen durch einen anders ausgeführten Anlagentransformator. Es handelt sich nicht mehr um ein Mehrwicklungstransformator wie bei der ersten Ausführungsform in Fig. 2, sondern vielmehr um zwei gesonderte Teiltransformatoren 6'. Sie sind beide identisch aufgebaut und jeder weist eine Niederspannungswicklung 61, 62 und eine Mittelspannungswicklung 60, 60' auf. Die beiden Mittelspannungswicklungen 60, 60' sind parallel geschaltet und wirken gemeinsam auf den Mittelspannungsschalter 7 zur Abgabe der elektrischen Leistung an das Netz 9. Auf der Niederspannungsseite ist der Aufbau identisch wie bei der in Fig. 2 dargestellten Ausführungsform. Im regulären Betrieb ergeben sich dieselben Verhältnisse wie bei der in Fig. 2 dargestellten Ausführungsform, d. h. die Strombelastung in jedem Zweig 51, 52 der Speiseleitung 4 ist halbiert. Durch die Ausführung des Anlagentransformators 6 als zwei kleine Teiltransformatoren 6' ist die Bemessungsgröße jedes der beiden Teiltransformatoren 6' halbiert. Dies bedeutet, dass nicht nur der Betriebsstrom, sondern auch der Kurzschlussstrom in jeder der beiden Speiseleitungen 51, 52 halbiert ist. Somit ergibt sich nicht nur für den Fall des regulären Betriebs und der dabei fließenden Betriebsströme, sondern auch im Fall eines Kurzschlusses mit den dabei fließenden größeren Kurzschlussströmen eine entsprechende Reduktion der Belastung der Leistungsschalter 41, 42 am Ende der Speiseleitungen 51, 52. Diese Ausführungsform bietet damit einen verbesserten Schutz der Leistungsschalter 41, 42.

In Fig. 4a-c sind Spannungen und Stromschaltzustände erläutert, und zwar am Beispiel eines Kurzschlussfalls. Der Spannungsverlauf ausgehend von einer Nennspannung bei einem Kurzschluss, der zum Zeitpunkt t=t₁ auftritt, ist in Fig. 4a dargestellt. Zum Zeitpunkt t1 bricht die Spannung schlagartig auf einen Wert Uₖ ein. Zu diesem Zeitpunkt sollen die Leistungsschalter 41, 42 trennen. Der erwünschte Verlauf, welcher bspw. von dem Leistungsschalter 41 realisiert ist, ist in Fig. 4b durch eine durchgezogene Linie dargestellt. Es sei angenommen, dass aufgrund unvermeidlicher technischer Toleranzen der Leistungsschalter 42 nicht exakt gleichzeitig, sondern mit einem leichten Zeitversatz zum Zeitpunkt t₂ schalte (siehe Darstellung mit gestrichelter Linie). In Fig. 4c ist der sich dabei ergebende Stromverlauf dargestellt, und zwar exemplarisch am Beispiel des Leistungsschalters 42. Zu Beginn, d. h. bis zum Zeitpunkt t₁, ist der Stromfluss recht niedrig im Bereich des Betriebsstroms I_{N}. Nach Eintreten des Kurzschlusses und Abklingen von Übergangstransienten nach dem Zeitpunkt t₂ ist der Stromfluss angestiegen auf einen wesentlich höheren Wert, nämlich den Wert für den Kurzschlussstrom I_{Max}. In der Zeit dazwischen, nämlich in der Umschaltzeit, während der der erste Leistungsschalter 41 bereits getrennt hat, der zweite aber noch nicht, ergibt sich der gestrichelt dargestellte Verlauf. Durch das verzögerte Umschalten des zweiten Leistungsschalters 42 fließt über diesen kurzzeitig der gesamte Strom, also nicht nur wie an sich vorgesehen die Hälfte. Es ergibt sich damit der mit strichpunktierter Linie dargestellte Überschwinger über den durch die punktierte Horizontallinie dargestellten Stromgrenzwert Iₘₐₓ der Leistungsschalters 41, 42. Dies ist der Verlauf, wie er sich bei einer Schaltanordnung gemäß dem Stand der Technik ergäbe. Durch die erfindungsgemäße Beschaltung, wie sie insbesondere bei der Ausführungsform gemäß Fig. 3 realisiert ist, wird der schädliche Überstrom (strichpunktierte Linie) vermieden, und die Strombelastung des Leistungsschützes 42 folgt der durchgezogenen Linie und bleibt unterhalb des Stromgrenzwerts Iₘₐₓ.

## Patentansprüche

1. Windenergieanlage umfassend einen Windrotor (12) mit einem Generator (2) und einen Umrichter (3) zur Erzeugung elektrischer Leistung, die über eine Speiseleitung (5) und einen Anlagentransformator (6) an ein Netz (9) abgegeben wird,
**dadurch gekennzeichnet, dass**
die Speiseleitung (5) als Doppelzweig mit leistungsverzweigter Leistungsschaltereinheit (4) ausgeführt ist mit einer ersten Speiseleitung (51) und einer parallelgeschalteten zweiten Speiseleitung (52), wobei jeder Speiseleitung (51, 52) eine eigene Niederspannungswicklung (61, 62) des Anlagentransformators (6) und ein eigener Leistungsschalter (41, 42) zugeordnet ist.

2. Windenergieanlage nach Anspruch 1, **dadurch gekennzeichnet, dass** eine dritte vorzugsweise weitere Speiseleitungen (53) parallel angeordnet sind.

3. Windenergieanlage nach Anspruch 1 oder 2, **dadurch gekennzeichnet, dass** die jeweils eine Niederspannungswicklung (61, 62) auf eine gemeinsame Mittelspannungswicklung (60) des Anlagentransformators (6) wirken.

4. Windenergieanlage nach Anspruch 1 oder 2, **dadurch gekennzeichnet, dass** jede der Speiseleitungen (51, 52) einen eigenen Transformator (61') mit eigener Mittelspannungswicklung (60, 60') umfasst.

5. Windenergieanlage nach einem der Ansprüche 1 bis 4,
**dadurch gekennzeichnet, dass** für jede Speiseleitung (51, 52) ein eigener Umrichter (3) der Windenergieanlage vorgesehen ist.

6. Windenergieanlage nach einem der vorangehenden Ansprüche, **dadurch gekennzeichnet, dass** keine Querverbindung zwischen der ersten und zweiten Speiseleitung (51, 52) besteht.

7. Windenergieanlage nach einem der vorangehenden Ansprüche,
**dadurch gekennzeichnet, dass** die Transformatoren (6') für die Speiseleitungen (51, 52) gleichdimensioniert sind, vorzugsweise mit Abweichungen von maximal 20%, weiter vorzugsweise maximal 10%.
